# EUROPEAN PATENT APPLICATION

(11) **EP 2 765 124 A2**
(43) Date of publication of application: **13.08.2014**
(21) Application number: 13192337.7
(22) Date of filing: 11.11.2013
(51) Int. Cl.: C04B 41/87, C04B 41/89, A47J 27/00, A61F 7/08

(54) **Heat-emitting composition absorbing microwaves and emitting heat, transfer paper comprising same, far-infrared-emitting ceramic ware comprising same, and preparation method thereof**

(30) Priority: 06.02.2013 KR 20130013444; 30.09.2013 KR 20130116103
(71) Applicant: Elix Corp., Jeollanam-do 534-902 (KR)
(72) Inventor: Lee, Oh Hoon, 530-831 Jeollanam-do (KR)
(74) Representative: Gassner, Wolfgang

(57) **Abstract**

The present disclosure relates to a heat-emitting composition coated on the surface of a heat-resistant ceramic ware and emitting heat by absorbing microwaves, which includes a heat-emitting metal oxide material and a binding material, a transfer paper for a ceramic ware including same, a far-infrared-emitting ceramic ware including same, and a method for preparing same. The heat-emitting composition coated on the surface of the ceramic ware absorbs microwaves from a microwave oven and emits heat and far-infrared light, such that food can be cooked evenly in short time by the emitted far-infrared light without burning or drying on the food surface. Further, the far-infrared-emitting ceramic ware can be used as a far-infrared-emitting medical device for fomentation. Also, because of superior heat resistance, the far-infrared-emitting ceramic ware of the present disclosure can be directly heated. Accordingly, cooking can be performed using various means such as gas stove, oven, etc. in addition to the microwave oven.

## Description

### TECHNICAL FIELD

The present disclosure relates to a heat-emitting composition coated on the surface of a heat-resistant ceramic ware, a transfer paper for a ceramic ware including same, a far-infrared-emitting ceramic ware including same and a method for preparing same.

### BACKGROUND

Sunlight is divided into visible and invisible lights. Infrared light, which is one of the invisible light, is divided into near-infrared, mid-infrared and far-infrared lights. The far-infrared light has a very long wavelength of 2.5-1000 µm. Particularly, since the light with a wavelength of 5.6-15 µm can penetrate into the body of living organisms, the far-infrared light can be absorbed by the human body and dilate blood vessels, promote blood circulation and boost metabolism in the subcutaneous fat layer, thereby promoting recovery from mental/physical fatigue, helping prevention from and treatment of various diseases and quickly excreting various harmful wastes, heavy metals, etc. out of the body. Also, the far-infrared light is known to be effective in drying, thawing, sterilization, warming, aging, water softening, freshness maintenance, purification and removal of offensive odor through ionization.

As materials that emit the far-infrared light in large quantity, there are naturally occurring minerals such as jade, germanium, elvan stone, etc., artificially synthesize materials, and mixtures of the natural minerals and the synthetic materials. These natural minerals, synthetic materials and mixtures are actively used in industries, food processing, cooking, heating, medical and health-promoting devices, bedclothes, furniture, clothes, household electrical appliances, exercise equipment, personal miscellaneous goods, etc. to achieve the effect of the far-infrared light.

With the development of health-promoting methods through food using the far-infrared-emitting materials, a lot of researches are under way not only on the cooking of food but also on the cooking containers for cooking food. Cooking containers having surface layers coated with far-infrared-emitting materials are studied for the purpose of degrading various toxic substances contained in food, promoting metabolism, etc. However, since the coating layer is thin, the amount of emitted far-infrared light is limited and cooking is impossible therewith. Also, because of charring or burning on the food surface, the coating layer cannot be used for containers used to heat food for several minutes or longer without stirring or overturning the food, such as a microwave oven, and it is mostly used as the outer coating of cooking containers for direct heating.

Korean Utility Model Registration No. 218047 proposes a cooking container having a far-infrared-emitting ceramic incorporated in a cooking plate formed by inserting fine far-infrared-emitting ceramic powders between the bottom plates of the cooking container, and Korean Utility Model Registration No. 381008 proposes a cooking container having a bottom portion made of copper and having a dual structure, wherein a far-infrared-emitting material is incorporated inside the bottom portion so as to emit far-infrared light without burning or charring. However, since both adopt a method of filling a far-infrared-emitting ceramic in a space separately formed inside the cooking container, the far-infrared light is not emitted from the material of the cooking container itself. Accordingly, the amount of far-infrared light emission is limited and the cooking container cannot be used for cooking in microwave ovens.

Meanwhile, Korean Patent Publication No. 2012-0114506 discloses a heating plate for a microwave oven including a ceramic sheet and a plate. Although food can be maintained at high temperatures of 200-250 °C for a long time after being taken out of a microwave oven, it is not suitable for a cooking container for cooking in a microwave oven for several minutes or longer because only the surface of the food is heated.

Also, Korean Patent Publication No. 2012-53808 discloses a heat-generating ceramic ware including 20-40 wt% of clay, 15-25 wt% of mullite, 15-23 wt% of ferrite, 5-10 wt% of pottery stone, 5-20 wt% of white clay, 10-35 wt% of water and 0.2-1 wt% of sodium silicate, wherein a ceramic composition with a high ferrite content is used to prepare the heat-generating ceramic ware. Since a ceramic with a high ferrite content is used, the strength and heat resistance of the ceramic ware are limited and increase of temperature through heating by a microwave oven is also limited.

### SUMMARY

The present disclosure is directed to providing a heat-emitting composition coated on the surface of a heat-resistant ceramic ware so that the heat-emitting composition coated on the surface of the ceramic ware absorbs microwaves from a microwave oven and emits heat and far-infrared light, such that food can be cooked evenly in short time by the emitted far-infrared light without burning or drying on the food surface, a transfer paper for a ceramic ware including same, a far-infrared-emitting ceramic ware including same and a method for preparing same.

In one general aspect, there is provided a heat-emitting composition coated on the surface of a heat-resistant ceramic ware and emitting heat by absorbing microwaves, including 30-85 wt% of a heat-emitting metal oxide material and 15-70 wt% of a binding material, wherein the heat-emitting metal oxide material includes at least 50 wt% of iron oxide based on the total heat-emitting metal oxide material, and the binding material includes at least 50 wt% of one or more selected from petalite, a mixture of 90-99 wt% of feldspar and 1-10 wt% of lithium, cordierite and mullite based on the total binding material.

In another general aspect, there is provided a transfer paper for a ceramic ware which includes the heat-emitting composition.

In another general aspect, there is provided a far-infrared-emitting ceramic ware prepared by coating the heat-emitting composition or a transfer paper for a ceramic ware including the heat-emitting composition on the surface of a heat-resistant ceramic ware and baking same.

In another general aspect, there is provided a method for preparing a far-infrared-emitting ceramic ware, including: forming a container using a ceramic composition and firstly baking the formed container at 700-1100 °C; coating, on the surface of the firstly baked container, the heat-emitting composition or a transfer paper for a ceramic ware including the heat-emitting composition; and applying a glaze on the container coated with the heat-emitting composition or the transfer paper for a ceramic ware including the heat-emitting composition and secondly baking same at 1200-1350 °C.

In another general aspect, there is provided a method for preparing a far-infrared-emitting ceramic ware, including: forming a container using a ceramic composition and firstly baking the formed container at 700-1100 °C; applying a glaze on the firstly baked container; coating, on the surface of the container with the glaze applied, the heat-emitting composition or a transfer paper for a ceramic ware including the heat-emitting composition; and secondly baking the container coated with the heat-emitting composition or the transfer paper for a ceramic ware including the heat-emitting composition at 1200-1350 °C.

In another general aspect, there is provided a method for preparing a far-infrared-emitting ceramic ware, including: forming a container using a ceramic composition and firstly baking the formed container at 700-1100 °C; applying a glaze on the surface of the firstly baked container and secondly baking same at 1200-1350 °C; coating, on the surface of the secondly baked container, the heat-emitting composition or a transfer paper for a ceramic ware including the heat-emitting composition; and thirdly baking the container coated with the heat-emitting composition or the transfer paper for a ceramic ware including the heat-emitting composition at 800-1350 °C.

The present disclosure relates to a heat-emitting composition coated on the surface of a heat-resistant ceramic ware and emitting heat by absorbing microwaves, which includes a heat-emitting metal oxide material and a binding material, a transfer paper for a ceramic ware including same, a far-infrared-emitting ceramic ware including same, and a method for preparing same. The heat-emitting composition coated on the surface of the ceramic ware absorbs microwaves from a microwave oven and emits heat and far-infrared light, such that food can be cooked evenly in short time by the emitted far-infrared light without burning or drying on the food surface. Further, the far-infrared-emitting ceramic ware can be used as a far-infrared-emitting medical device for fomentation. Also, because of superior heat resistance, the far-infrared-emitting ceramic ware of the present disclosure can be directly heated. Accordingly, cooking can be performed using various means such as gas stove, oven, etc. in addition to the microwave oven.

The surface of the heat-emitting composition may be heated to 180 °C or higher, specifically 250 °C or higher, more specifically 300 °C or higher, by absorbing microwaves when heated in a microwave oven of 700 W for 3 minutes or longer.

The heat-emitting composition of the present disclosure may emit far-infrared light in an amount of 1000 W/m² or more, specifically 3000 °C W/m² or more, more specifically 4000 °C W/m² or more, when heated in a microwave oven of 700 W for 3 minutes or longer.

No surface cracking occurs between a heat-emitting composition coating layer and a glaze layer or between the heat-emitting composition coating layer and a ceramic even after heating or repeated heating and cooling because the difference in thermal expansion coefficient between the heat-emitting composition coating layer and the glaze layer or between the heat-emitting composition coating layer and the ceramic is small.

### BRIEF DESCRIPTION OF THE DRAWINGS

The above and other objects, features and advantages of the present disclosure will become apparent from the following description of certain exemplary embodiments given in conjunction with the accompanying drawings, in which:
FIGS. 1a-1g show a procedure of preparing a far-infrared-emitting ceramic ware in Preparation Example 3-3 (FIG. 1 a shows a firstly baked container, FIGS. 1b and 1c show coating of a heat-emitting composition, FIG. 1d shows the container dried after coating of the heat-emitting composition, FIG. 1e shows application of a glaze, and FIG. 1g shows the container after second baking.);
FIG. 2a shows a container dried after applying a glaze in Preparation Example 3-5, FIG. 2b shows the inner surface of a far-infrared-emitting ceramic ware prepared in Preparation Example 3-5, and FIG. 2c shows the inner surface of a far-infrared-emitting ceramic ware prepared in Preparation Example 3-6;
FIG. 3a shows a firstly baked container after coating a heat-emitting composition on the outer bottom surface and drying in Preparation Example 3-10, and FIG. 3b shows the outer bottom surface of a far-infrared-emitting ceramic ware prepared in Preparation Example 3-10; and
FIG. 4a shows a secondly baked container after coating a heat-emitting composition on the outer bottom surface and drying in Preparation Example 3-11, and FIG. 4b shows the outer bottom surface of a far-infrared-emitting ceramic ware prepared in Preparation Example 3-11.

### DETAILED DESCRIPTION OF EMBODIMENTS

Hereinafter, exemplary embodiments will be described in detail with reference to the accompanying drawings.

The present disclosure provides a heat-emitting composition coated on the surface of a heat-resistant ceramic ware and emitting heat by absorbing microwaves.

The heat-emitting composition of the present disclosure emits heat by absorbing microwaves after coated on the surface of a heat-resistant ceramic ware. When the temperature on the surface of the heat-emitting composition is raised to 180 °C or above through microwaves from a microwave oven, far-infrared light is emitted at an amount of 1000 W/m² or greater without surface cracking between a heat-emitting composition coating layer and a glaze layer or between the heat-emitting composition coating layer and a ceramic even after heating or repeated heating and cooling.

The heat-resistant ceramic ware of the present disclosure refers to a ceramic ware which is not cracked or broken even after rapid heating to 100 °C or higher, specifically 150 °C or higher, more specifically 200 °C or higher, further more specifically 250 °C or higher, or rapid heating followed by rapid cooling.

The heat-emitting composition of the present disclosure which is coated on the surface of a heat-resistant ceramic ware and emits heat by absorbing microwaves (hereinafter, simply 'heat-emitting composition') includes a heat-emitting metal oxide material mainly consisting of iron oxide (hereinafter, also referred to as simply 'heat-emitting material') and a binding material for binding the heat-emitting material with a ceramic and a glaze.

The heat-emitting composition of the present disclosure includes 30-85 wt% of the heat-emitting metal oxide material and 15-70 wt% of the binding material. The heat-emitting metal oxide material includes at least 50 wt% of iron oxide and the binding material includes at least 50 wt% of one or more selected from petalite, a mixture of 90-99 wt% of feldspar and 1-10 wt% of lithium, cordierite and mullite.

In the heat-emitting composition of the present disclosure, the heat-emitting metal oxide material may include at least 50 wt%, specifically 60-95 wt%, more specifically 65-80 wt%, of iron oxide based on the total heat-emitting metal oxide material. Or, the heat-emitting metal oxide material may include 20-65 wt%, specifically 40-65 wt%, more specifically 45-60 wt%, of iron oxide based on the total heat-emitting composition.

If the content of iron oxide is smaller than the lowest limit, the surface of the far-infrared-emitting ceramic ware with the heat-emitting composition coated is not heated to 180 °C or higher, specifically 250 °C or higher, more specifically 300 °C or higher, most specifically 350-450 °C or higher, by absorbing microwaves (when heated in a microwave oven of 700 W for 3 minutes). Since the heat-emitting composition is not heated sufficiently, the amount of emitted far-infrared light is insufficient and cooking time cannot be reduced. If the content of iron oxide exceeds the highest limit, the temperature of the surface coated with the heat-emitting composition is raised further. However, since the amount of the binding material is decreased and the thermal expansion coefficient of the heat-emitting composition increases, fusion with the ceramic or the glaze cannot be accomplished and the glaze or the heat-emitting composition may be peeled off.

In the heat-emitting composition of the present disclosure, the heat-emitting metal oxide material may further include one or more selected from tin oxide, zinc oxide and manganese dioxide. Although the tin oxide, zinc oxide or manganese dioxide cannot sufficiently achieve the effect of heating by absorbing microwaves when used alone, it enhances the heating effect when used together with iron oxide and enhances binding with the binding material at the same time.

In the heat-emitting composition of the present disclosure, the heat-emitting metal oxide material may include 5-40 wt% of one or more selected from tin oxide, zinc oxide and manganese dioxide based on the total heat-emitting metal oxide material.

The tin oxide may be included in an amount of 10-40 wt%, specifically 15-30 wt%, more specifically 16-24 wt%, based on the total heat-emitting metal oxide material. In this case, the ability of absorbing microwaves is improved even at decreased iron oxide content. As a result, the increase of the temperature of the heat-emitting composition can be increased as compared to when iron oxide is used alone for the same heating time in a microwave oven. Also, since the amount of the binding material can be increased, fusion with the ceramic or the glaze can be improved.

The zinc oxide may be included in an amount of 5-25 wt%, specifically 8-20 wt%, more specifically 10-16 wt%, based on the total heat-emitting metal oxide material. In this case, the ability of absorbing microwaves is improved even at decreased content of iron oxide or iron oxide and tin oxide. As a result, the increase of the temperature of the heat-emitting composition can be increased as compared to when iron oxide alone or iron oxide and tin oxide is used for the same heating time in a microwave oven. Also, since the binding material can be increased, fusion with the ceramic or the glaze can be improved.

The manganese dioxide may be included in an amount of 1-20 wt%, specifically 2-15 wt%, more specifically 3-10 wt%, based on the total heat-emitting metal oxide material. In this case, the ability of absorbing microwaves is improved even at decreased content of iron oxide or iron oxide and tin oxide. As a result, the increase of the temperature of the heat-emitting composition can be increased as compared to when iron oxide alone or iron oxide and tin oxide is used for the same heating time in a microwave oven. Also, since the binding material can be increased, fusion with the ceramic or the glaze can be improved.

In the heat-emitting composition of the present disclosure, the binding material may include at least 50 wt%, specifically 60-100 wt%, more specifically 65-85 wt%, further more specifically 71-82 wt%, of one or more selected from petalite, a mixture of 90-99 wt% of feldspar and 1-10 wt% of lithium, cordierite and mullite based on the total binding material. Or, the binding material may include 15-50 wt%, specifically 16-30 wt%, of one or more selected from petalite, a mixture of 90-99 wt% of feldspar and 1-10 wt% of lithium, cordierite and mullite based on the total heat-emitting composition.

Although all of the petalite, the mixture of 90-99 wt% of feldspar and 1-10 wt% of lithium, cordierite or mullite can help the heat-emitting metal oxide material fuse well with the ceramic or glaze, use of petalite may be preferred since the cordierite or mullite may result in weaker binding for the same amount as petalite and may result in a large difference in thermal expansion coefficient with the glaze because of decreased effect of reducing the thermal expansion coefficient. Instead of the petalite, a mixture of 90-99 wt% of feldspar and 1-10 wt% of lithium, specifically a mixture of 93-97 wt% of feldspar and 3-7 wt% of lithium, may be used. Also, instead of using petalite itself, a material rich in petalite, for example, a heat-resistant frit including 70 wt% or more, specifically 80 wt% or more, of petalite may be used.

Since the petalite, which is a lithium aluminum silicate mineral, has a very low thermal expansion coefficient, it decreases the thermal expansion coefficient of the heat-emitting composition containing a metal oxide, particularly iron oxide, at a very high content of 30 wt% or greater, thereby reducing the difference in thermal expansion coefficient with the glaze and enhancing binding with the ceramic or glaze. If the content of the petalite is smaller than the lowest limit, the binding with the ceramic or glaze may be insufficient. And, if its content exceeds the highest limit, microwaves may not be absorbed sufficiently since the amount of the heat-emitting material is decreased.

In the heat-emitting composition of the present disclosure, the binding material may further include one or more selected from bone ash, talc and bentonite. Since the bone ash, talc or bentonite allows fusing well with the ceramic or glaze even at decreased content of petalite, the amount of the heat-emitting material can be increased. As a result, the emission of heat and far-infrared light can be increased by increasing the absorption of microwaves.

In the heat-emitting composition of the present disclosure, the binding material may include 5-40 wt% of one or more selected from bone ash, talc and bentonite based on the total binding material.

The bone ash may be included in an amount of 5-40 wt%, specifically 7-25 wt%, more specifically 10-20 wt%, based on the total binding material. Since the bone ash allows fusing well with the ceramic or glaze even at decreased content of petalite, the amount of the heat-emitting material can be increased and, as a result, the absorption of microwaves can be increased.

The talc may be included in an amount of 1-20 wt%, specifically 2-10 wt%, more specifically 3-8 wt%, based on the total binding material. The talc may enhance binding by allowing uniform mixing of materials.

The bentonite may be included in an amount of 1-10 wt%, specifically 2-8 wt%, based on the total binding material. The bentonite may enhance binding.

In the heat-emitting composition of the present disclosure, the weight ratio of the iron oxide and the petalite may be maintained at 10 : 3-10 : 5 in order to reduce the difference in thermal expansion coefficient with the glaze.

The present disclosure also provides a transfer paper for a ceramic ware including the heat-emitting composition coated on the surface of a heat-resistant ceramic ware and emitting heat by absorbing microwaves.

A transfer layer of the transfer paper for a ceramic ware of the present disclosure, which includes the heat-emitting composition coated on the surface of a heat-resistant ceramic ware and emitting heat by absorbing microwaves, is transferred onto the surface of a firstly baked container, a firstly baked and glaze-applied container, a secondly baked container, etc. during baking, and the heat-emitting composition is fused on the surface of the container.

By using the transfer paper for a ceramic ware, the heat-emitting composition may be coated with a uniform thickness and production yield can be remarkably improved at the same as compared to when the heat-emitting composition is coated directly on the container.

The transfer paper for a ceramic ware of the present disclosure is not particularly limited in structure or preparation method as long as it includes the heat-emitting composition which is coated on the surface of a heat-resistant ceramic ware and emits heat by absorbing microwaves. For example, the transfer paper for a ceramic ware may be prepared by coating a transfer layer including 30-80 wt% of the heat-emitting composition on a transfer paper or a transfer paper having a release layer formed thereon and drying same.

The transfer paper for a ceramic ware of the present disclosure is prepared by forming a transfer layer including the heat-emitting composition on a transfer paper. A release layer may be formed between the transfer paper and the transfer layer so that the transfer layer can be released easily. Further, a protection layer for protecting the transfer layer may be formed on the transfer layer.

The transfer paper may be made of a pulp-based paper or a flexible synthetic resin film. The flexible synthetic resin film may be made from polyethylene, polypropylene, polyester, polycarbonate, polyurethane, ethylene-vinyl acetate copolymer or a mixture thereof and may have a thickness of from about 50 µm to about 0.2 mm.

The release layer coated on the transfer paper may include a surfactant, a water-soluble polymer that can be dissolved and degraded in water, such as starch paste, water-soluble cellulose derivatives, gum arabic, gelatin, polyvinyl alcohol, etc. or a thermoplastic resin such as polyamide, polyolefin, polyester, silicone, wax, etc.

The transfer layer may be prepared by mixing the heat-emitting composition in powder form, a binder for providing binding ability to the heat-emitting composition powder and an organic solvent for dissolving the heat-emitting composition powder and the binder and coating the mixture on a transfer paper or a transfer paper having a release layer formed thereon.

The heat-emitting composition powder included in the transfer layer may have an average particle size of 10-600 µm, specifically 50-500 µm, more specifically 100-300 µm. If the average particle size exceeds the highest limit, fusion with the glaze or ceramic may be difficult. And, if the average particle size is smaller than the lowest limit, a further process may be required for fine grinding and cost may increase.

The binder included in the transfer layer may be a viscous synthetic resin such as urethane resin, acrylic resin, etc. And, the solvent is not particularly limited as long as it can dissolve the binder and can be dried easily. For example, methanol, ethanol, toluene, methyl ethyl ketone, etc. may be used.

The transfer layer may be prepared by mixing 30-80 wt% of the heat-emitting composition powder, 5-40 wt% of the binder and 5-40 wt% of the organic solvent.

The protection layer may include a transparent or semitransparent resin. For example, acrylic resin or paraffin may be used.

A method for transferring the heat-emitting composition of the present disclosure onto the surface of a firstly baked container, a firstly baked, glaze-applied dried container, a secondly baked container, etc. using the transfer paper for a ceramic ware of the present disclosure is not particularly limited. For example, the transfer paper for a ceramic ware may be immersed in water so as to release the transfer layer bound to the transfer layer or the protection layer. The released transfer layer or transfer layer bound to the protection layer may be attached onto the surface of the container and, after drying, it may be fused on the container by baking.

The present disclosure also provides a far-infrared-emitting ceramic ware prepared by coating the heat-emitting composition coated on the surface of a heat-resistant ceramic ware and emitting heat by absorbing microwaves or a transfer paper for a ceramic ware including the heat-emitting composition on the surface of a heat-resistant ceramic ware and baking same.

The far-infrared-emitting ceramic ware may have a shape of a plate, a cylinder, a sphere, a tube, a hexahedron, a dish, a roasting pan, a cup, a kettle or a saucepan. For the purpose of cooking, the ceramic ware may have a shape of a cup, a kettle or a saucepan having a lid. And, for the purpose of far-infrared fomentation, the ceramic ware may have a shape of a plate, a cylinder, a sphere, etc.

The heat-emitting composition or the transfer paper for a ceramic ware including the heat-emitting composition may be coated on the outer surface, inner surface or both of the heat-resistant ceramic ware. Specifically, it may be coated on the bottom surface.

The heat-resistant ceramic ware of the present disclosure may be formed from a ceramic composition including 40-70 wt% of petalite and 4-18 wt% of elvan stone.

The petalite is used as a base material for reducing thermal expansion and contraction of the ceramic. It is used in an amount of 40-70 wt%, specifically 55-68 wt%, based on the total ceramic composition excluding water. If the content of the petalite is lower than the lowest limit, breakage may occur owing to high thermal expansion and contraction during heating and cooling and low heat resistance. And, if it exceeds the highest limit, the contents of frit, feldspar, talc, kaolin, silica, clay, etc. necessary to form the container are limited. Further, the content of elvan stone is also limited and the risk of forming failure increases.

The frit is used to improve heat resistance at high temperatures and enhance binding between the ceramic and the glaze layer. Specifically, high-temperature, heat-resistant frit may be used and it is used in an amount of 3-15 wt%, specifically 5-10 wt%, based on the total ceramic composition excluding water. If the content of the frit is lower than the lowest limit, breakage may occur owing to high thermal expansion and contraction during heating and cooling and low heat resistance. And, if it exceeds the highest limit, the contents of feldspar, talc, kaolin, silica, clay, etc. necessary to form the container are limited. Further, the content of elvan stone is also limited and the risk of forming failure increases.

Specifically, the frit may be lead-free alkaline frit or borate frit and may have a melting point of 1200-1300 °C. The composition of the frit is not specially limited. For example, the frit may include 40-45 parts by weight of SiO₂, 12-18 parts by weight of Na₂O, 1.5-2.5 parts by weight of K₂O, 2-3 parts by weight of BaO, 0.5-1.0 part by weight of NiO, 0.5-1.0 part by weight of MnO, 0.5-1.2 parts by weight of CuO, 0.1-0.2 part by weight of CoO and 5-10 parts by weight of CaO.

The elvan stone is geologically a granite and is also called quartz monzonite. It is a rock wherein quartz and feldspar are mixed densely. Being added to the ceramic composition, the elvan stone improves stability during direct heating by absorbing water for a long time. The elvan stone is used in an amount of 4-18 wt%, specifically 8-16 wt%, based on the total ceramic composition excluding water. If the content of the elvan stone is lower than the lowest limit, heat resistance may be unsatisfactory. And, if it exceeds the highest limit, the contents of frit, talc, kaolin, clay, etc. necessary to form the container are limited.

The ceramic composition of the heat-resistant ceramic ware of the present disclosure may further include one or more ceramic material selected from feldspar, talc, kaolin, silica and clay for forming of the container. Specifically, 0.2-4 wt% of talc, 6-18 wt% of kaolin and 4-16 wt% of clay may be included based on the total ceramic composition excluding water. If the contents are outside the above range, forming may be difficult, cracking may occur during baking, or heat resistance may be unsatisfactory.

After the container formed using the ceramic composition of the present disclosure is firstly baked, a glaze including petalite and elvan stone may be applied to reduce the difference in thermal expansion and contraction of the container and the glaze and to reduce water absorption to 2-5 wt% when immersed in water for 24 hours.

Specifically, the glaze of the present disclosure may include 52-68 wt% of petalite, 8-19 wt% of frit, 0.2-4 wt% of talc, 1-8 wt% of wollastonite and 8-25 wt% of elvan stone. If the contents are outside the above range, fine cracks may be formed when heating the ceramic ware. The frit used in the glaze may be identical to or different from the frit used in the ceramic composition. Specifically, binding between the glaze and the ceramic may be enhanced when the frit of the glaze is similar or identical to the frit used in the ceramic composition in characteristics.

The glaze of the present disclosure may further include one or more material selected from feldspar, kaolin and limestone. Specifically, it may include 1.5-5 wt% of feldspar, 2.5-5 wt% of kaolin and 1-5 wt% of limestone.

In the far-infrared-emitting ceramic ware of the present disclosure, the difference in thermal expansion coefficient of the heat-emitting composition and the glaze at 40-800 °C may be 2x10⁻⁶ /°C or smaller, specifically 1 x10⁻⁶ /°C or smaller. If the difference in thermal expansion coefficient of the heat-emitting composition and the glaze is larger, the heat-emitting composition and the glaze may not be fused well with the ceramic.

In the far-infrared-emitting ceramic ware of the present disclosure, the heat-emitting composition may be coated in an amount of 20-80 mg/cm², specifically 40-70 mg/cm². If the coating amount is larger than the highest limit, the heat-emitting composition and the glaze may not be fused well with the ceramic. And, if it is smaller than the lowest limit, sufficient emission of heat and far-infrared light may not be achieved.

In the far-infrared-emitting ceramic ware of the present disclosure, the heat-emitting composition may be coated on the outer surface, inner surface or entire of the heat-resistant ceramic ware. Sufficient emission of heat and far-infrared light may be achieved even when it is coated only one of the inner surface and the outer surface of the ceramic ware. But, specifically, it may be coated on the outer surface, particularly on the outer bottom surface, of the ceramic ware so as to avoid direct contact with food which is cooked inside the heat-resistant ceramic ware.

The far-infrared-emitting ceramic ware of the present disclosure may be prepared by different methods depending on at which stage the heat-emitting composition coated on the surface of the heat-resistant ceramic ware and emitting heat by absorbing microwaves or the transfer paper for a ceramic ware including the heat-emitting composition is coated on the container.

An exemplary method for preparing a far-infrared-emitting ceramic ware of the present disclosure may include: forming a container using a ceramic composition and firstly baking the formed container at 700-1100 °C; coating, on the surface of the firstly baked container, the heat-emitting composition or a transfer paper for a ceramic ware including the heat-emitting composition; and applying a glaze on the container coated with the heat-emitting composition or the transfer paper for a ceramic ware including the heat-emitting composition and secondly baking same at 1200-1350 °C.

Another exemplary method for preparing a far-infrared-emitting ceramic ware of the present disclosure may include: forming a container using a ceramic composition and firstly baking the formed container at 700-1100 °C; applying a glaze on the firstly baked container; coating, on the surface of the container with the glaze applied, the heat-emitting composition or a transfer paper for a ceramic ware including the heat-emitting composition; and secondly baking the container coated with the heat-emitting composition or the transfer paper for a ceramic ware including the heat-emitting composition at 1200-1350 °C.

Another exemplary method for preparing a far-infrared-emitting ceramic ware of the present disclosure may include: forming a container using a ceramic composition and firstly baking the formed container at 700-1100 °C; applying a glaze on the surface of the firstly baked container and secondly baking same at 1200-1350 °C; coating, on the surface of the secondly baked container, the heat-emitting composition or a transfer paper for a ceramic ware including the heat-emitting composition; and thirdly baking the container coated with the heat-emitting composition or the transfer paper for a ceramic ware including the heat-emitting composition at 800-1350 °C.

If the heat-emitting composition is coated on the firstly baked and glaze-applied container, it may be difficult to coat the heat-emitting composition to a desired thickness. If the heat-emitting composition is coated on the secondly baked container, coating may be difficult at room temperature and it has to be repeated several times while heating the secondly baked container to 60-100 °C. Accordingly, it may be desired to coat the heat-emitting composition on the firstly baked container.

The transfer paper for a ceramic ware including the heat-emitting composition may not be attached well on the firstly baked container because of pores present on the surface. Also, the transfer paper for a ceramic ware may not be attached well to the firstly baked and glaze-applied container. Accordingly, it may be desired to coat the transfer paper for a ceramic ware on the secondly baked container to improve workability and reduce failure.

After the formation of the container including the heat-emitting composition, followed by the coating of the heat-emitting composition or the transfer paper for a ceramic ware including the heat-emitting composition on the surface of the firstly baked container or the application of the glaze, a drying process is included as a matter of course.

And, specifically, the glaze may be applied by spray coating.

### EXAMPLES

Hereinafter, the present disclosure will be described in more detail through examples, comparative examples and preparation examples. However, the following examples are for illustrative purposes only and not intended to limit the scope of this disclosure.

The chemical composition of ceramic materials used in examples and comparative examples is described in Table 1, except for frit.

**Table 1**

| | SiO₂ | Al₂O₃ | Fe₂O₃ | CaO | MgO | LiO₂ | K₂O | Na₂O | TiO₂ | P₂O₅ |
|---|---|---|---|---|---|---|---|---|---|---|
| Petalite | 78.2 | 16.8 | 0.037 | 0 | 0 | 4.38 | 0.21 | 0.40 | 0 | 0 |
| Potash feldspar | 65.9 | 18.8 | 0.07 | 0.09 | 0.09 | 0 | 11.4 | 3.03 | 0.02 | 0 |
| Soda feldspar | 70.9 | 16.7 | 0.30 | 0.60 | 0.10 | 0 | 2.00 | 6.30 | 0.20 | 0 |
| Talc | 61.1 | 0 | 0.91 | 7.03 | 30.9 | 0 | 0 | 0 | 0 | 0 |
| Kaolin | 47.6 | 37.6 | 0.24 | 0.06 | 0.34 | 0 | 2.32 | 0 | 0.02 | 0 |
| Silica | 99.5 | 0.20 | 0.02 | 0.01 | 0.01 | 0 | 0.01 | 0.01 | 0.02 | 0 |
| Clay | 46.6 | 36.4 | 1.12 | 0.04 | 0.21 | 0 | 0.78 | 0.05 | 0.32 | 0 |
| Elvan stone | 59.1 | 14.6 | 5.26 | 4.22 | 4.04 | 0 | 2.40 | 3.52 | 0.72 | 0 |
| Bone ash | 0.87 | 0.42 | 0.03 | 54.09 | 1.53 | 0 | 0.02 | 0.92 | 0.01 | 40.01 |
| Limestone | 0.23 | 0.06 | 0.34 | 53.18 | 0 | 0 | 0 | 0 | 0 | 0 |
| Bentonite | 57.4 | 11.6 | 1.42 | 2.37 | 3.76 | 0 | 1.24 | 2.51 | 0.08 | 0.08 |

In Table 1, the values are in wt% unit, and trace components and weight loss on heating are not included. As frit, one having a melting point of 1200 °C was used.

### Preparation Examples 1: Preparation of ceramic for ceramic ware

The ceramic materials described in Table 1 were mixed with water in a ball mill, as described in Table 2, to a residual content less than 1 wt% and an average particle size of 1-40 µm, at 325 mesh. As a result, a ceramic having a water content of 22-23 wt% was prepared.

**Table 2**

| | Petalite | Frit | Feldspar | Talc | Kaolin | Silica | Clay | Elvan stone |
|---|---|---|---|---|---|---|---|---|
| Prep. Ex. 1-1 | 65 | 6 | 2 | 2 | 10 | 0 | 8 | 7 |
| Prep. Ex. 1-2 | 63 | 5 | 0 | 2 | 12 | 0 | 8 | 10 |
| Prep. Ex. 1-3 | 58 | 5 | 0 | 2 | 15 | 0 | 8 | 12 |
| Prep. Ex. 1-4 | 55 | 4 | 2 | 2 | 16 | 1 | 9 | 14 |
| Prep. Ex. 1-5 | 59 | 11 | 5 | 5 | 10 | 5 | 5 | 0 |
| Prep. Ex. 1-6 | 58 | 8 | 4 | 3 | 15 | 2 | 8 | 2 |
| Prep. Ex. 1-7 | 50 | 5 | 2 | 2 | 12 | 0 | 9 | 20 |
| Prep. Ex. 1-8 | 72 | 0 | 0 | 2 | 11 | 0 | 3 | 12 |

### Preparation Examples 2: Preparation of ceramic wares with different ceramic compositions

Containers (saucepans; diameter: 280 mm, height: 120 mm, bottom surface thickness: 4 mm, foot: 3 mm) were formed by mechanical spinning using the ceramics of Preparation Examples 1-1 to 1-8.

The formed containers were dried at room temperature for 15 hours and firstly baked at 850 °C. Then, after applying a glaze including 60 wt% of petalite, 13 wt% of frit, 2 wt% of talc, 5 wt% of kaolin, 5 wt% of wollastonite and 15 wt% of elvan stone (Preparation Example 4-2), the containers were secondly baked at 1320 °C for 20 hours to prepare heat-resistant ceramic wares of Preparation Examples 2-1 to 2-8.

### Test Example 1: Characteristics of heat-resistant ceramic wares depending on ceramics

The result of evaluating formability, fine cracking, water absorption, heat resistance and thermal expansion coefficient of the heat-resistant ceramic wares of Preparation Examples 2-1 to 2-8 is shown in Table 3.

Formability was evaluated as good (○) if forming of the container was possible and no collapse or deformation occurred during first and second baking, as moderate (Δ) if forming of the container was possible but partial deformation occurred during first and second baking, and as poor (X) if forming of the container was impossible or collapse occurred during first and second baking.

Fine cracking was evaluated as good (○), moderate (Δ) or poor (X) through visual examination.

Water absorption was calculated as the percentage of absorbed water after immersing in water for 24 hours.

Heat resistance was evaluated by observing the presence of cracks after keeping the test sample in an oven at 500 °C for 1 hour and then quenching in water at 4 °C.

Thermal expansion coefficient was measured in a temperature range from 40 to 800 °C using a thermal expansion coefficient measuring device (Netzsch, Germany), using a cylindrical test sample 7 mm in diameter and 50 mm in height.

**Table 3**

| | Prep. Ex. 2-1 | Prep. Ex. 2-2 | Prep. Ex. 2-3 | Prep. Ex. 2-4 | Prep. Ex. 2-5 | Prep. Ex. 2-6 | Prep. Ex. 2-7 | Prep. Ex. 2-8 |
|---|---|---|---|---|---|---|---|---|
| Formability | ○ | ○ | ○ | ○ | Δ | Δ | X | X |
| Fine cracking | ○ | ○ | ○ | ○ | ○ | ○ | Δ | Δ |
| Water absorption (%) | 3.6 | 3.2 | 3.0 | 3.1 | 5.8 | 5.2 | 6.5 | 7.6 |
| Heat resistance | No crack | No crack | No crack | No crack | No crack | No crack | No crack | Crack occurred |
| Thermal expansion coefficient (x10⁻⁶ /°C) | 0.88 | 0.95 | 0.86 | 0.98 | 1.25 | 0.94 | 1.85 | 2.66 |

It can be seen that the ceramics of Preparation Examples 2-1 to 2-4 resulted in better formability as compared to the ceramics of Preparation Examples 2-5 to 2-8. Also, they resulted in a water absorption of 5 wt% or less as well as excellent heat resistance and low thermal expansion coefficient as compared to Preparation Example 2-8.

### Preparation Example 3: Preparation of far-infrared-emitting ceramic wares with different heat-emitting compositions

Containers (saucepans; diameter: 280 mm, height: 120 mm, bottom surface thickness: 4 mm, foot: 4 mm) were formed by mechanical spinning using the ceramic of Preparation Example 1-3.

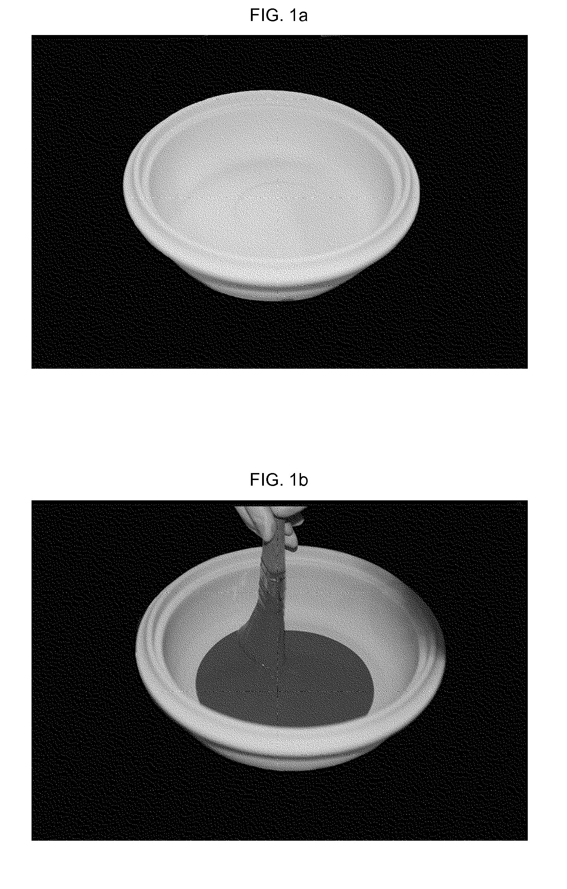

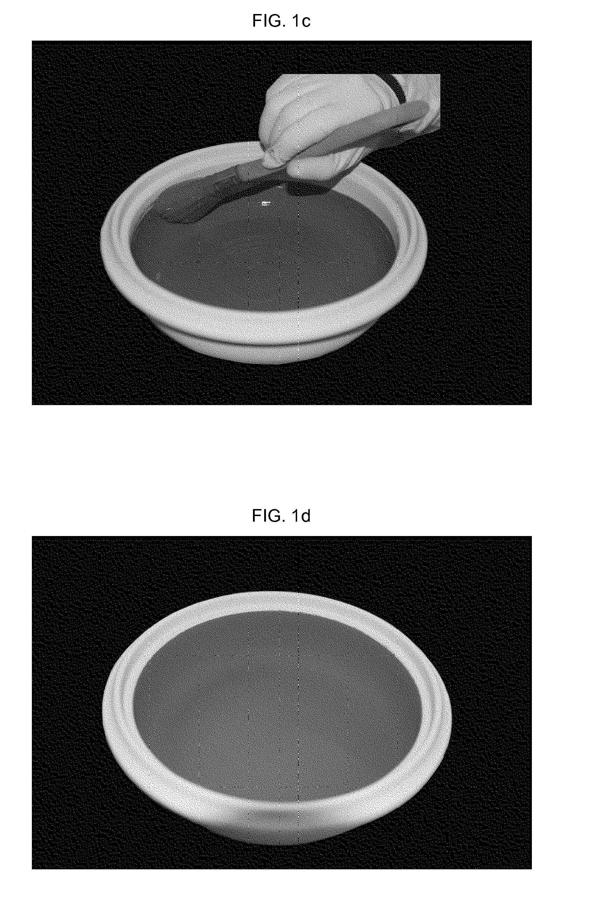

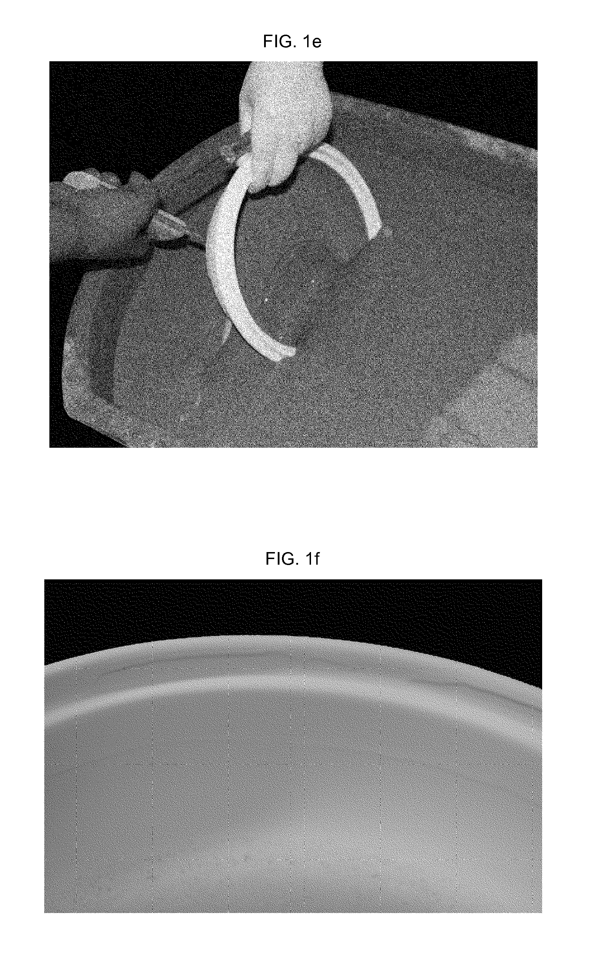

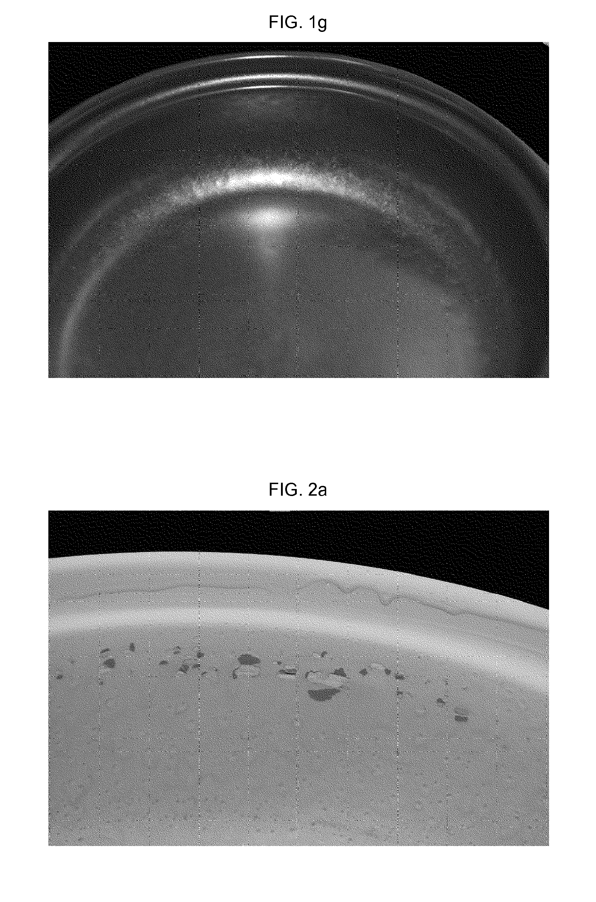

The formed containers were dried at room temperature for 15 hours and firstly baked at 850 °C (see FIG. 1a). After coating heat-emitting composition mixture powders of Preparation Examples 3-1 to 3-9 (see Table 4) diluted in water on the inner surface of the containers at 50 mg/cm² based on the heat-emitting composition (see FIGS. 1b and 1c), the containers were dried (see FIG. 1d). Then, after applying a glaze (Preparation Example 4-2; see FIG. 1e) and drying (see FIG. 1f), the containers were secondly baked at 1320 °C for 20 hours to prepare far-infrared-emitting ceramic wares of Preparation Examples 3-1 to 3-9 (see FIG. 1g).

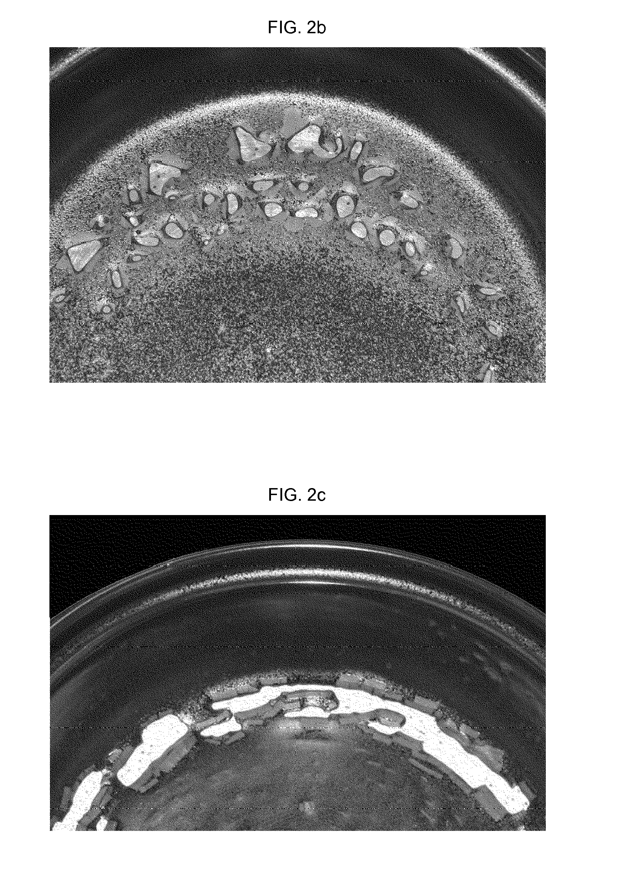

FIGS. 1a-1g show the procedure of preparing the far-infrared-emitting ceramic ware in Preparation Example 3-3. FIG. 2a shows the container dried after applying the glaze in Preparation Example 3-7, FIG. 2b shows the inner surface of the far-infrared-emitting ceramic ware prepared in Preparation Example 3-7, and FIG. 2c shows the inner surface of the far-infrared-emitting ceramic ware prepared in Preparation Example 3-8.

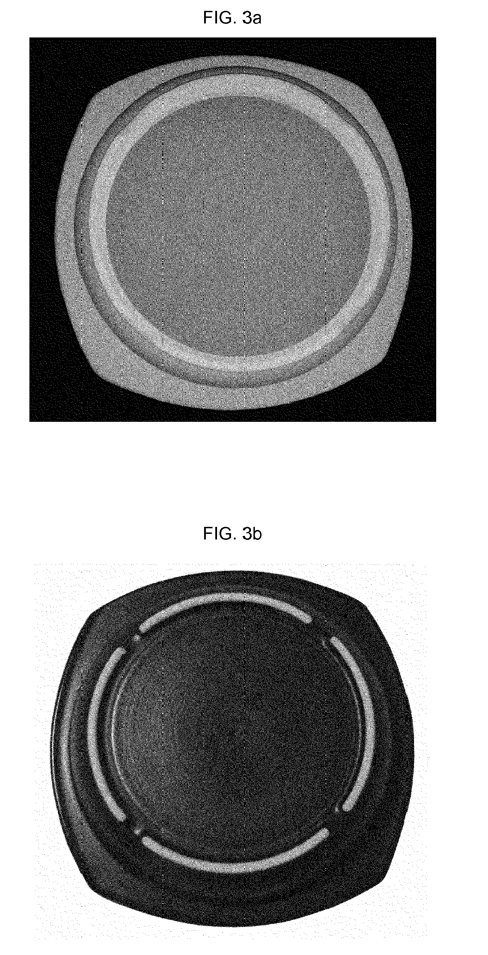

A far-infrared-emitting ceramic ware of Preparation Example 3-10 was prepared as follows. The procedure of forming and firstly baking the container was the same as in Preparation Examples 3-1 to 3-9. Then, after coating a heat-emitting composition mixture powder of Preparation Example 3-10 (Table 4) diluted in water on the outer surface, not on the inner surface, of the container at 50 mg/cm² based on the heat-emitting composition, the container was dried (see FIG. 3a). Then, after applying a glaze (Preparation Example 4-2) and drying, the container was secondly baked at 1320 °C for 20 hours to prepare the far-infrared-emitting ceramic ware of Preparation Example 3-10 (see FIG. 3b).

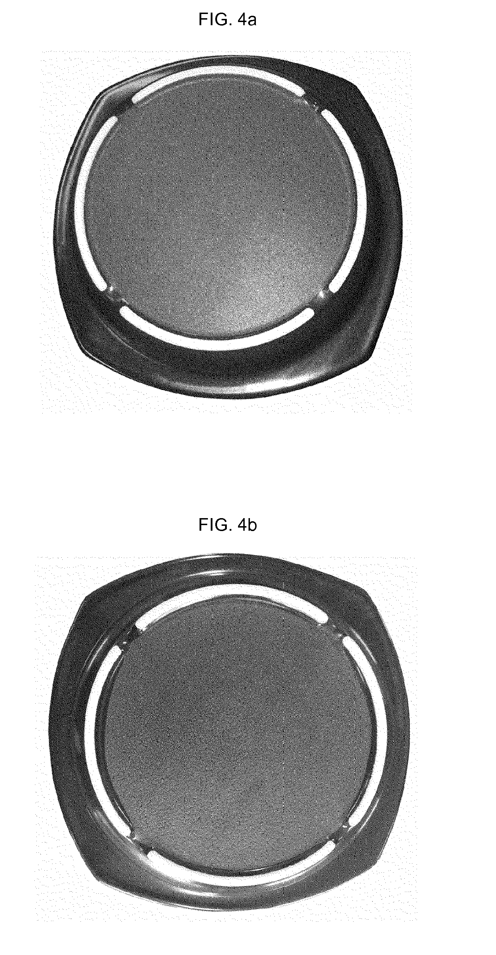

A far-infrared-emitting ceramic ware of Preparation Example 3-11 was prepared as follows. The procedure of forming and firstly baking the container was the same as in Preparation Example 3-10. Then, after applying a glaze (Preparation Example 4-2) and drying, without coating a heat-emitting composition on the formed container, the container was secondly baked at 1320 °C for 20 hours. Then, a transfer paper for a ceramic ware was prepared by repeatedly printing a transfer layer composition prepared by mixing 60 wt% of the heat-emitting composition powder of Preparation Example 3-10, 20 wt% of acrylic resin and 20 wt% of toluene on a paper having a release layer including a water-soluble cellulose derivative formed thereon at 50 mg/cm² based on the heat-emitting composition. After removing the paper by immersing in water, the transfer paper for a ceramic ware was coated on the surface of the secondly baked container (see FIG. 4a), and the container was baked at 900 °C for 4 hours to prepare the far-infrared-emitting ceramic ware of Preparation Example 3-10 (see FIG. 4b).

**Table 4**

| | Iron oxide | Tin oxide | Zinc oxide | Manganese dioxide | Petalite | Cordierite | Mullite | Potash feldspar | Soda feldspar | Bone ash | Talc | Limestone | Bentonite |
|---|---|---|---|---|---|---|---|---|---|---|---|---|---|
| Prep. Ex. 3-1 | 70 | 0 | 0 | 0 | 30 | 0 | 0 | 0 | 0 | 0 | 0 | 0 | 0 |
| Prep. Ex. 3-2 | 55 | 15 | 0 | 0 | 25 | 0 | 0 | 0 | 0 | 3 | 2 | 0 | 0 |
| Prep. Ex. 3-3 | 52 | 13 | 5 | 0 | 25 | 0 | 0 | 0 | 0 | 3 | 2 | 0 | 0 |
| Prep. Ex. 3-4 | 50 | 13 | 5 | 3 | 24 | 0 | 0 | 0 | 0 | 3 | 2 | 0 | 0 |
| Prep. Ex. 3-5 | 52 | 13 | 5 | 0 | 0 | 25 | 0 | 0 | 0 | 3 | 2 | 0 | 0 |
| Prep Ex. 3-6 | 52 | 13 | 5 | 0 | 0 | 0 | 25 | 0 | 0 | 3 | 2 | 0 | 0 |
| Prep. Ex. 3-7 | 50 | 13 | 5 | 3 | 0 | 0 | 0 | 24 | 0 | 3 | 2 | 0 | 0 |
| Prep. Ex. 3-8 | 50 | 13 | 5 | 3 | 0 | 0 | 0 | 0 | 24 | 3 | 2 | 0 | 0 |
| Prep. Ex. 3-9 | 25 | 20 | 10 | 3 | 24 | 0 | 0 | 0 | 0 | 3 | 2 | 3 | 0 |
| Prep. Ex. 3-10 | 53 | 14 | 8 | 0 | 18 | 0 | 0 | 0 | 0 | 4 | 2 | 0 | 1 |
| Prep. Ex. 3-11 | 53 | 14 | 8 | 0 | 18 | 0 | 0 | 0 | 0 | 4 | 2 | 0 | 2 |

### Test Example 2: Characteristics of far-infrared-emitting ceramic wares depending on heat-emitting compositions

The heat-resistant ceramic ware of Preparation Example 2-3, which was prepared by applying the glaze of Preparation Example 4-2 on the ceramic of Preparation Example 1-3 but not applying the heat-emitting composition, was compared with the far-infrared-emitting ceramic wares of Preparation Examples 3-1 to 3-11 to which the heat-emitting composition was coated in thermal expansion coefficient, surface state of the heat-emitting composition coated area, surface temperature and far-infrared emission. The result is shown in Table 5.

Thermal expansion coefficient was measured in the same manner as in Test Example 1.

Surface state of the heat-emitting composition coated area was evaluated as good (○) if no peeling of the glaze layer was observed through visual examination, as moderate (Δ) if spots occurred, and as poor (X) if the glaze and the heat-emitting composition were peeled and the ceramic was exposed.

Far-infrared emission was measured according to KCL-FIR-1005 (FT-IR measurement relative to black body using spectrometer) of the Korea Conformity Laboratories. The emission of far-infrared light with a wavelength 3-20 µm was measured per unit area of the heat-emitting composition coated surface.

**Table 5**

| | Thermal expansion coefficient (x10⁻⁶ /°C) | Surface state | Surface temperature (°C) | Far-infrared emission (W/m²) |
|---|---|---|---|---|
| Prep. Ex. 2-3 | 0.89 | ○ | 75 | 368 |
| Prep. Ex. 3-1 | 1.14 | ○ | 310 | 4,380 |
| Prep. Ex. 3-2 | 1.12 | ○ | 360 | 7,520 |
| Prep. Ex. 3-3 | 1.11 | ○ | 450 | 9,145 |
| Prep. Ex. 3-4 | 0.98 | ○ | 420 | 8,860 |
| Prep. Ex. 3-5 | 1.75 | Δ | 380 | 6,920 |
| Prep. Ex. 3-6 | 1.66 | Δ | 370 | 6,705 |
| Prep. Ex. 3-7 | 3.65 | X | 350* | 2,970 |
| Prep. Ex. 3-8 | 2.86 | X | 340* | 2,450 |
| Prep. Ex. 3-9 | 1.35 | ○ | 155 | 780 |
| Prep. Ex. 3-10 | 1.22 | ○ | 475 | 9,950 |
| Prep. Ex. 3-11 | 1.23 | ○ | 470 | 9,820 |

For Preparation Examples 3-7 and 3-8, the surface temperature was measured at the portion where the heat-emitting composition was not peeled off.

Although the heat-resistant ceramic ware of Preparation Example 2-3 showed smooth surface state, the surface temperature was hardly increased after heating in a microwave oven for 3 minutes and far-infrared emission was also only slight.

In contrast, the far-infrared-emitting ceramic wares of Preparation Examples 3-1 to 3-4, 3-10 and 3-11 could be heated to 300 °C or above and exhibited 12 times or more far-infrared emission as compared to Preparation Example 2-3.

Preparation Examples 3-5 and 3-6, wherein the composition of the heat-emitting material was the same as Preparation Example 3-3 but the composition of the binding material was different, showed spots on the surface, and surface temperature and far-infrared emission were lower relative to Preparation Example 3-3.

Unlike Preparation Examples 3-1 to 3-4, Preparation Examples 3-7 and 3-8 showed complete peeling of the heat-emitting composition and the glaze without being fused with the ceramic, as shown in FIGS. 2b and 2c. The surface temperature of the portion where the heat-emitting composition was not peeled off was lower than Preparation Example 3-3 but comparable to Preparation Example 3-2. However, far-infrared emission was much lower when compared with Preparation Example 3-2.

Preparation Example 3-9 showed no surface cracking, but the increase in surface temperature or far-infrared emission was lower when compared with the far-infrared-emitting ceramic wares of Preparation Examples 3-1 to 3-4.

### Test Example 3: Characteristics of far-infrared-emitting ceramic wares depending on coating amount of heat-emitting compositions

Far-infrared-emitting ceramic wares were prepared in the same manner as in Preparation Example 3-3, except for varying the coating amount of the heat-emitting composition at 10, 30, 70 and 90 mg/cm². Surface state and surface temperature of the heat-emitting composition coated portion were evaluated. The result is given in Table 6.

**Table 6**

| | Heat-emitting composition coating amount (mg/cm²) | Surface state | Surface temperature(°C) |
|---|---|---|---|
| Prep. Ex. 3-3-1 | 10 | ○ | 190 |
| Prep. Ex. 3-3-2 | 30 | ○ | 350 |
| Prep. Ex. 3-3-3 | 70 | Δ | 480 |
| Prep. Ex. 3-3-4 | 90 | X | 360 |

When the coating amount of the heat-emitting composition was 10 mg/cm², sufficient increase in surface temperature could not be achieved for the same heating time. When the coating amount of the heat-emitting composition was 70 mg/cm², surface spots began to occur, but the surface temperature was higher than Preparation Example 3-3 wherein the coating amount of the heat-emitting composition was 50 mg/cm². When the coating amount of the heat-emitting composition was 90 mg/cm², the ceramic ware could not be used because of poor adhesion with the glaze and surface cracking.

### Preparation Example 4: Preparation of far-infrared-emitting ceramic wares with different glazes

Containers (saucepans; diameter: 280 mm, height: 120 mm, bottom surface thickness: 4 mm, foot: 4 mm) were formed by mechanical spinning using the ceramic of Preparation Example 1-3.

The formed containers were dried at room temperature for 15 hours and firstly baked at 850 °C. Then, after coating the heat-emitting composition of Preparation Example 3-3 at 50 mg/cm² and drying, followed by applying glazes of Preparation Examples 4-1 to 4-6 (Table 7), the containers were secondly baked at 1320 °C for 20 hours to prepare far-infrared-emitting ceramic wares.

**Table 7**

| | Petalite | Frit | Feldspar | Talc | Kaolin | Wollastonite | Silica | Limestone | Elvan stone |
|---|---|---|---|---|---|---|---|---|---|
| Prep. Ex. 4-1 | 60 | 13 | 0 | 2 | 5 | 2 | 0 | 0 | 18 |
| Prep. Ex. 4-2 | 60 | 13 | 0 | 2 | 5 | 5 | 0 | 0 | 15 |
| Prep. Ex. 4-3 | 65 | 10 | 0 | 2 | 5 | 5 | 0 | 2 | 11 |
| Prep. Ex. 4-4 | 55 | 15 | 3 | 2 | 0 | 2.5 | 0 | 2.5 | 20 |
| Prep. Ex. 4-5 | 60 | 20 | 3 | 3 | 8 | 6 | 0 | 0 | 0 |
| Prep. Ex. 4-6 | 35 | 45 | 5 | 5 | 8 | 0 | 2 | 0 | 0 |

### Test Example 4: Characteristics of far-infrared-emitting ceramic wares depending on glazes

Fine cracking, water absorption and heat resistance of the far-infrared-emitting ceramic wares were evaluated in the same manner as in Test Example 1. The result is shown in Table 8.

**Table 8**

| | Prep. Ex. 4-1 | Prep. Ex. 4-2 | Prep. Ex. 4-3 | Prep. Ex. 4-4 | Prep. Ex. 4-5 | Prep. Ex. 4-6 |
|---|---|---|---|---|---|---|
| Fine cracking | ○ | ○ | ○ | ○ | ○ | ○ |
| Water absorption (%) | 3.2 | 3.0 | 3.2 | 3.2 | 4.3 | 4.5 |
| Heat resistance | No crack | No crack | No crack | No crack | No crack | No crack |

While the present disclosure has been described with respect to the specific embodiments, it will be apparent to those skilled in the art that various changes and modifications may be made without departing from the spirit and scope of the disclosure as defined in the following claims.

## Claims

1. A heat-emitting composition coated on the surface of a heat-resistant ceramic ware and emitting heat by absorbing microwaves, comprising 30-85 wt% of a heat-emitting metal oxide material and 15-70 wt% of a binding material, wherein the heat-emitting metal oxide material comprises at least 50 wt% of iron oxide based on the total heat-emitting metal oxide material, and the binding material comprises at least 50 wt% of one or more selected from petalite, a mixture of 90-99 wt% of feldspar and 1-10 wt% of lithium, cordierite and mullite based on the total binding material.

2. The heat-emitting composition coated on the surface of a heat-resistant ceramic ware and emitting heat by absorbing microwaves according to claim 1, wherein the heat-emitting metal oxide material comprises 60-95 wt% of iron oxide based on the total heat-emitting metal oxide material.

3. The heat-emitting composition coated on the surface of a heat-resistant ceramic ware and emitting heat by absorbing microwaves according to claim 2, wherein the heat-emitting metal oxide material further comprises one or more selected from tin oxide, zinc oxide and manganese dioxide.

4. The heat-emitting composition coated on the surface of a heat-resistant ceramic ware and emitting heat by absorbing microwaves according to claim 3, wherein the heat-emitting metal oxide material comprises 5-40 wt% of one or more selected from tin oxide, zinc oxide and manganese dioxide based on the total heat-emitting metal oxide material.

5. The heat-emitting composition coated on the surface of a heat-resistant ceramic ware and emitting heat by absorbing microwaves according to claim 4, wherein the heat-emitting metal oxide material comprises 10-40 wt% of tin oxide based on the total heat-emitting metal oxide material.

6. The heat-emitting composition coated on the surface of a heat-resistant ceramic ware and emitting heat by absorbing microwaves according to claim 1, wherein the binding material comprises 60-100 wt% of one or more selected from petalite, a mixture of 90-99 wt% of feldspar and 1-10 wt% of lithium, cordierite and mullite based on the total binding material.

7. The heat-emitting composition coated on the surface of a heat-resistant ceramic ware and emitting heat by absorbing microwaves according to claim 1, wherein the binding material further comprises one or more selected from bone ash, talc and bentonite.

8. The heat-emitting composition coated on the surface of a heat-resistant ceramic ware and emitting heat by absorbing microwaves according to claim 7, wherein the binding material comprises 5-40 wt% of one or more selected from bone ash, talc and bentonite based on the total binding material.

9. A transfer paper for a ceramic ware comprising the heat-emitting composition coated on the surface of a heat-resistant ceramic ware and emitting heat by absorbing microwaves according to any one of claims 1 to 7.

10. The transfer paper for a ceramic ware according to claim 9, wherein the transfer paper for a ceramic ware is prepared by coating a transfer layer comprising 30-80 wt% of the heat-emitting composition on a transfer paper or a transfer paper having a release layer formed thereon and drying same.

11. A far-infrared-emitting ceramic ware prepared by coating the heat-emitting composition coated on the surface of a heat-resistant ceramic ware and emitting heat by absorbing microwaves according to any one of claims 1 to 7 or a transfer paper for a ceramic ware comprising the heat-emitting composition on the surface of a heat-resistant ceramic ware and baking same.

12. The far-infrared-emitting ceramic ware according to claim 11, wherein the far-infrared-emitting ceramic ware has a shape of a plate, a cylinder, a sphere, a tube, a hexahedron, a dish, a roasting pan, a cup, a kettle or a saucepan.

13. A method for preparing a far-infrared-emitting ceramic ware, comprising:
forming a container using a ceramic composition and firstly baking the formed container at 700-1100 °C;
coating, on the surface of the firstly baked container, the heat-emitting composition coated on the surface of a heat-resistant ceramic ware and emitting heat by absorbing microwaves according to any one of claims 1 to 7 or a transfer paper for a ceramic ware comprising the heat-emitting composition; and
applying a glaze on the container coated with the heat-emitting composition or the transfer paper for a ceramic ware comprising the heat-emitting composition and secondly baking same at 1200-1350 °C.

14. A method for preparing a far-infrared-emitting ceramic ware, comprising:
forming a container using a ceramic composition and firstly baking the formed container at 700-1100 °C;
applying a glaze on the firstly baked container;
coating, on the surface of the container with the glaze applied, the heat-emitting composition coated on the surface of a heat-resistant ceramic ware and emitting heat by absorbing microwaves according to any one of claims 1 to 7 or a transfer paper for a ceramic ware comprising the heat-emitting composition; and
secondly baking the container coated with the heat-emitting composition or the transfer paper for a ceramic ware comprising the heat-emitting composition at 1200-1350 °C.

15. A method for preparing a far-infrared-emitting ceramic ware, comprising:
forming a container using a ceramic composition and firstly baking the formed container at 700-1100 °C;
applying a glaze on the surface of the firstly baked container and secondly baking same at 1200-1350 °C;
coating, on the surface of the secondly baked container, the heat-emitting composition coated on the surface of a heat-resistant ceramic ware and emitting heat by absorbing microwaves according to any one of claims 1 to 7 or a transfer paper for a ceramic ware comprising the heat-emitting composition; and
thirdly baking the container coated with the heat-emitting composition or the transfer paper for a ceramic ware comprising the heat-emitting composition at 800-1350 °C.
